# EUROPEAN PATENT APPLICATION

(11) **EP 1 143 335 A1**
(43) Date of publication of application: **10.10.2001**
(21) Application number: 00107314.7
(22) Date of filing: 04.04.2000
(51) Int. Cl.: G06F 9/445

(54) **A method and device for providing a user-defined parameter setting**

(71) Applicant: MTT Medical Technology Transfer AG, 1705 Freiburg (CH)
(72) Inventor: Tan, A.C., London W12 9PH (GB)
(74) Representative: Grünecker, Kinkeldey, Stockmair & Schwanhäusser Anwaltssozietät

(57) **Abstract**

A method for providing a user-defined parameter setting for use in connection with a controllable device, said device providing a user interface for specifying parameters defining the parameter setting, said method comprising the steps of: displaying said user interface, displaying the parameters of the current parameter setting, inputting parameters for specifying a new parameter setting, storing the parameters of the specified new parameter setting as current parameter setting, controlling the device according to the current parameter setting, wherein the displaying of the parameters comprises displaying a plurality of pre-stored parameter setting options corresponding to user-defined parameter setting inputs from a plurality of users; and wherein the inputting of parameters comprises selecting a specific setting from said plurality of pre-stored parameter settings and controlling the device according to the selected parameter setting.

## Description

The invention relates generally to user preference settings and, more specifically, to a method for providing a user-defined parameter setting for use in connection with a controllable device according to the preamble part of claim 1, and a controllable device comprising a user interface for specifying the parameters defining such a user-defined parameter setting according to the preamble part of claim 5.

There are currently many different controllable devices that may be configured according to a user's preferences. Such controllable devices cover a wide spectrum of different applications, e.g. medical diagnostic apparatuses, computer hardware/software, toys, electronic machines or home appliances. Each time a user wants to use one of these applications, he needs to interact with the application in order to determine an optimal setting required for obtaining specific results. However, because of the nature of the numerous parameters and conditions, which are mostly different from one application to another, providing the required parameters often reveals an undue burden to novice users or users who use the corresponding application only occasionally. Various switches, sliders, knobs, rotary dials, keys on a keyboard, etc. must be tuned to obtain a correct setting.

Furthermore, e.g. with respect to computer hardware/software, values must be provided which are mostly not self-explanatory and do not provide a novice user with a clear idea of what a possible configuration obtained by certain parameters will be like. Thus, even if the getting of optimal settings is fairly easy for an expert or experienced user, who is familiar with the controls and/or has prior training, it is currently very complex and complicated for novice users.

There are a number of user interfaces in which a user can store and recall so called "preference settings" by a specific menu call. These preference settings can be applied globally or locally and vary from application to application, depending on the functions that they are designed to perform, i. e., by way of example, different parameters may be needed for the setting of a word processing software then for the setting of a video game. Hence, these preference settings suffer from a certain rigidity that disables the use of a specific parameter setting user interface in more then one application.

In more detail, current parameter setting user interfaces only provide one specific parameter setting for a specific application, wherein said parameter setting may also be dependent on a particular user. As a result, each user must provide its own parameters in order to determine a desired parameter setting for controlling the specific application in a desired manner.

Accordingly, it is the object of the present invention to provide for a method and user interface for simplifying the specification of parameters corresponding to a user-specific parameter setting for use in connection with a controllable device, said method and said user interface being designed for an application in various different controllable devices coming from a wide spectrum of distinct applications.

This object is solved by the subject matters of independent claims 1 and 5.

Preferred embodiments are defined by the dependent claims.

The invention makes a standardized method available for providing a user-defined parameter setting for use in connection with a controllable device. According to the present invention, an expert or experienced user who is familiar with the parameter setting of a specific controllable device may provide parameters for the creation of a specific parameter setting. In this way, each experienced user may store satisfying parameters as a specific parameter setting. If a novice user wants to use the same application, he may select one of the pre-stored parameter settings.

As different experts may store their respective parameters, a plurality of user-defined settings from a plurality of different users is provided for every user, especially for novice users. Hence, the need for too much novice user interaction with the parameter setting user interface is alleviated by "borrowing" the pre-stored settings from the expert users, thus enabling an "instant transfer" of the expert's know-how, corresponding to optimal settings, which are made available to the inexperienced user.

In a preferred embodiment of the present invention, any user may select a parameter setting from a displayed list containing a plurality of pre-stored parameter setting options corresponding to user-specific parameter setting inputs from a plurality of users.

According to another preferred embodiment, two standardized buttons are added to any controllable device where more than one complicated setting needs to be performed. Either button may be used to store the parameters of a current parameter setting and the other button may be used to recall a specific setting from the plurality of pre-stored parameter settings. It is noted that each activation of the recall-button results in recalling and restoring another user-defined parameter setting from the plurality of pre-stored parameter settings and controlling the device according to the restored parameter setting.

One important advantage of the present invention is the standardization of the method for providing a user-defined parameter setting for use in connection with a controllable device. Accordingly, the universality of the underlying logic in handling the recall of different parameter settings may even lead to a universally recognized pair of interaction buttons on all major interaction environments, thus facilitating a rapid recall of optimal settings. Therefore, this method may become a standard on any application that needs user interaction for providing settings and every user will automatically be aware of the button roles. Hence, in the future an expert user who knows how to set parameters on a controllable device may always choose the store-button and the inexperienced user who wants a rapid optimal setting will always choose the recall-button.

The present invention will be described further, by way of examples, with reference to the accompanying drawings, the drawings representing:
Figure 1, a parameter setting user interface according to a preferred embodiment of the present invention;
Figure 2, a flow diagram of a method for storing a user-defined parameter setting;
Figure 3, a flow diagram of a method for recalling a parameter setting; and
Figure 4, a block diagram and implementation of an embodiment of the present invention by means of a micro-controller.

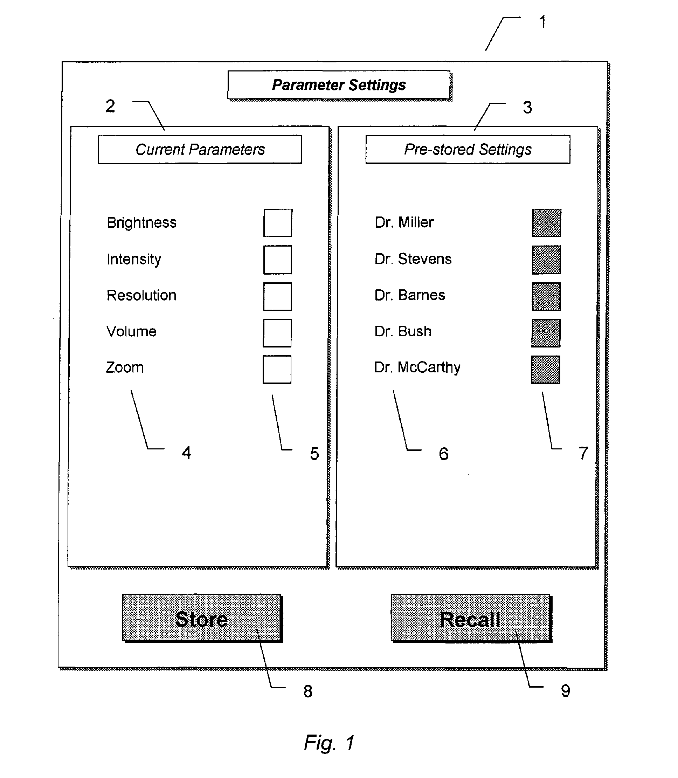

Figure 1 shows a parameter setting user interface 1 according to a preferred embodiment of the present invention. The user interface 1 is essentially divided into two different parts, a first part 2 for displaying value fields 5 corresponding to different parameters 4 of the current parameter setting and a second part 3 for displaying parameter setting options 7 corresponding to pre-stored settings from a plurality of different users 6. Furthermore, a store-button 8 and a recall-button 9 for storing and recalling a specific parameter setting are shown.

If an experienced user wants to provide new parameter values to define a new parameter setting, he may provide said values in the represented user interface 1 within fields 5, associated with different parameters 4. Once the experienced user has entered satisfying values into the fields 5, he may store the so defined parameters 4 as a new parameter setting by pressing the store-button 8.

If a novice user wants to use the application, he may choose a specific parameter setting from a plurality of pre-stored parameter setting options 7, displayed in the pre-stored settings frame 3. Preferably, said plurality of parameter setting options 7 corresponds to user-defined parameter setting inputs from a plurality of users 6. When the novice user has selected an option 7, he may recall and restart the corresponding parameter setting by pressing the recall-button 9.

The advantage of such a user interface 1 resides in the fact that a novice user may easily and rapidly choose a parameter setting that has been stored by an experienced user and therefore, the novice user does not need to spend too much time trying to define his own parameters.

In the represented user interface 1, the pre-stored settings are associated with the names of different users 6. This may be advantageous if a user, novice or experienced, should use a certain application with respect to the preferences of another user, or if he knows the way of working of a specific user, thus wanting to apply the same preference settings. Nevertheless, displaying of the names of a plurality of users 6 may be optional.

In another preferred embodiment of the present invention, the pre-stored settings part 3 may not be displayed, but only a recall-button 9, so that every time when said recall-button 9 is pressed, another user-defined parameter setting is picked up from a storage means and restored for controlling the associated controllable device, thus enabling a user who activates the recall-button 9 to directly see, what a corresponding configuration of the controllable device may be like.

It should be noted, that the user interface 1 shown in Figure 1 has been designed in form of a window that may be displayed, e.g. on a computer screen. Nevertheless, instead of providing parameters in form of parameter values 5 via a keyboard (not shown) and displaying the same, said values 5 may also be provided by various other setting means on an interaction environment, as switches, sliders, knobs, rotary dials and so on. In such a case, according to another preferred embodiment of the present invention, only the addition of a store-button 8 and a recall-button 9 on said interaction environment will be required, wherein the recall-button 9 operates as described above.

Furthermore, both buttons may be color coded, e.g. a red/green pair, wherein the red color may represent storing of the current parameter values 5 and the green button may represent recalling a pre-stored parameter setting. Another possibility may be a letter-code like "S" to abbreviate store and "R" to abbreviate recall on the respective buttons.

An important advantage of adding two buttons in the described manner is their universality, that enables for an application in any user interaction environment requiring a definition of user-defined parameter settings.

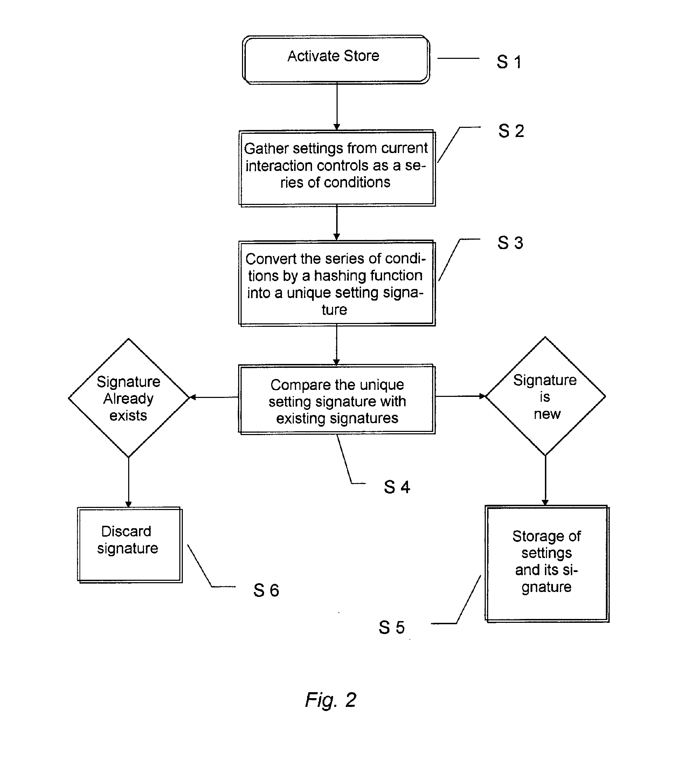

Figure 2 shows a flow diagram illustrating a method for storing a user-defined parameter setting.

When an experienced user has entered satisfying parameters to appropriately control a controllable device, he will activate a store-button provided on a user interface S1. This will lead the controllable device to gather the parameters from current interaction controls as a series of conditions S2. Each condition represents a parameter specified by the user. Then, in step S3, the gathered series of conditions is converted into a unique setting signature by a hashing function. In order to determine, if this unique setting signature already exists, it is compared with pre-stored signatures S4. If the signature is new, the corresponding parameter setting and the signature are stored S5. If the signature already exists, it is discarded S6.

Thus, it is insured that a specific user-defined parameter setting is only stored once. This is necessary in a user interaction environment, where only a recall-button is provided and a novice user needs to switch over the pre-stored settings, so as to find a required parameter setting, in order to avoid the recall of repeatedly pre-stored settings.

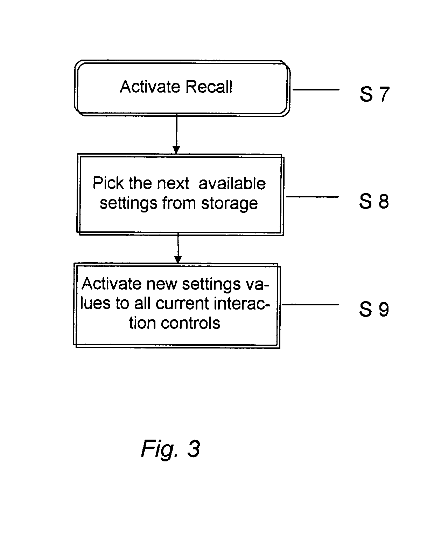

A method for recalling a parameter setting according to a preferred embodiment of the present invention, using only one recall-button, is illustrated by means of the flow diagram of Figure 3.

With respect to the method illustrated by Figure 3, when a novice user activates a recall-button S7, a next available parameter setting is picked up from a storage means S8 and restored in order to take over the control of the controllable device S9.

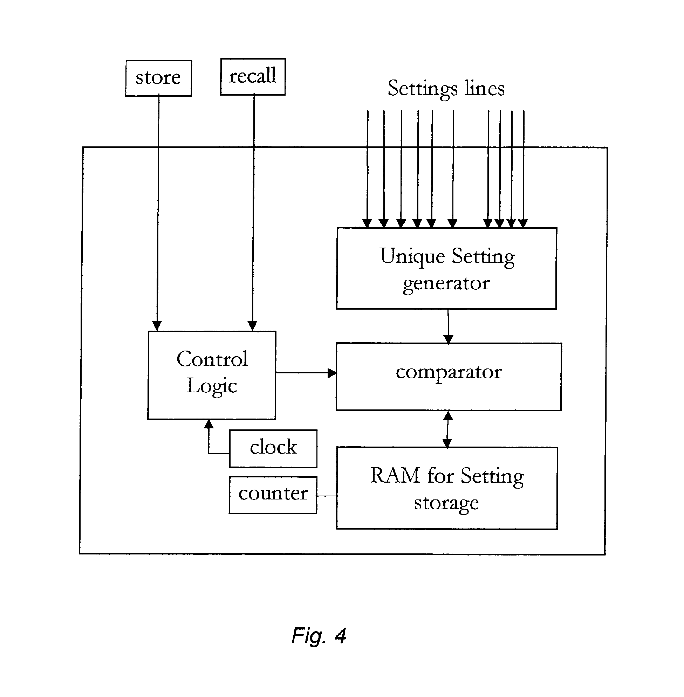

Figure 4 shows a block diagram representing an implementation of an embodiment of the present invention by means of a micro-controller.

With respect to Figure 4, a store- and a recall-button are provided for storing and recalling parameter settings in or from a RAM storage means. Different parameters are provided via setting lines to a unique setting generator that gathers the parameters from current interaction controls as a series of conditions and converts said series by a hashing function into a unique setting signature. Said setting signature is compared in the comparator with existing signatures stored in the RAM storage means. If the new setting signature does not already exist, it is stored in the RAM storage means together with the corresponding parameter setting. If it already exists, it is discarded. Furthermore, a control logic is provided for controlling store and recall operations.

## Claims

1. A method for providing a user-defined parameter setting for use in connection with a controllable device, said device providing a user interface (1) for specifying parameters (4, 5) defining the parameter setting, said method comprising the steps of:
displaying said user interface (1),
displaying the parameters (4, 5) of the current parameter setting,
inputting parameters (5) for specifying a new parameter setting,
storing (8) the parameters (5) of the specified new parameter setting as current parameter setting,
controlling the device according to the current parameter setting,
**characterized in that**
the displaying of the parameters (4, 5) comprises displaying a plurality of pre-stored parameter setting options (7) corresponding to user-defined parameter setting inputs from a plurality of users (6); and
the inputting of parameters (5) comprises selecting (9) a specific setting from said plurality of pre-stored parameter settings and controlling the device according to the selected parameter setting.

2. The method according to claim 1, **characterized in that** the storing of the input parameters occurs only with respect to settings not matching any pre-stored user-specific parameter settings.

3. The method according to claim 1 or 2, **characterized in that** said controllable device being a medical diagnosis apparatus.

4. The method according to one of claims 1 to 3, **characterized in that** the step of selecting (9) a specific setting from a plurality of pre-stored parameter settings comprises activating a selecting means (9) that automatically selects a setting among said plurality of pre-stored parameter settings, so that the device is controlled according to the selected parameter setting.

5. A controllable device comprising a user interface (1) for specifying parameters (4) defining a user-defined parameter setting for said controllable device, comprising:
display means for displaying said user interface (1),
input means (2) for inputting parameters (4, 5) for specifying a new parameter setting,
storing means (8) for storing the parameters (4, 5) of the specified new parameter setting as current parameter setting, and
controlling means for controlling said controllable device according to the current parameter setting,
**characterized by** further comprising
selecting means (9) responsive to a user operation for automatically selecting a setting among said plurality of pre-stored parameter settings, so that the device is controlled according to the selected parameter setting.

6. The controllable device according to claim 5, **characterized in that** said controllable device being a medical diagnosis apparatus.

7. The controllable device according to claims 5 or 6, **characterized by** further comprising display means (3) for displaying a plurality of pre-stored parameter setting options (7) corresponding to user-defined parameter settings input by a plurality of users (6).
